# EUROPEAN PATENT SPECIFICATION

(11) **EP 2 541 717 B1**
(45) Date of publication and mention of the grant of the patent: **29.10.2014**
(21) Application number: 12173748.0
(22) Date of filing: 27.06.2012
(51) Int. Cl.: H02H 3/00, H02H 3/093, H02H 7/26

(54) **System and method for automated fault control and restoration of smart grids**
System und Verfahren für automatische Fehlerkontrolle und Wiederherstellung von intelligenten Stromnetzen
Système et procédé de contrôle automatisé des défauts et restauration de grilles intelligentes

(30) Priority: 30.06.2011 US 201113173651
(43) Date of publication of application: 02.01.2013
(73) Proprietor: General Electric Company, Schenectady, NY 12345 (US)
(72) Inventor: Bush, Stephen Francis, Niskayuna, NY New York 12309 (US); Mahony, Michael Joseph, Niskayuna, NY New York 12309 (US)
(74) Representative: Picker, Madeline Margaret

(56) References cited:
- US-B1- 7 110 231
- TERRENCE SMITH ET AL: "Advanced distribution reclosing using wireless communications", RURAL ELECTRIC POWER CONFERENCE (REPC), 2011 IEEE, IEEE, 10 April 2011 (2011-04-10), pages C3-1, XP031860529, DOI: 10.1109/REPCON.2011.5756720 ISBN: 978-1-61284-057-4
- SALMAN MOHAGHEGHI ET AL: "Applications of IEC 61850 in distribution automation", POWER SYSTEMS CONFERENCE AND EXPOSITION (PSCE), 2011 IEEE/PES, IEEE, 20 March 2011 (2011-03-20), pages 1-9, XP031870533, DOI: 10.1109/PSCE.2011.5772491 ISBN: 978-1-61284-789-4
- JARVENTAUSTA P ET AL: "Smart grid power system control in distributed generation environment", ANNUAL REVIEWS IN CONTROL, PERGAMON, AMSTERDAM, NL, vol. 34, no. 2, 1 December 2010 (2010-12-01), pages 277-286, XP027507088, ISSN: 1367-5788, DOI: 10.1016/J.ARCONTROL.2010.08.005 [retrieved on 2010-11-18]

## Description

### BACKGROUND

A smart grid delivers electricity to consumers while leveraging digital communication and control technologies to minimize financial cost, save energy, and increase reliability. If designed properly, the smart grid will have a significant impact on improving a wide range of aspects in the electric power generation and distribution industry. Examples include self-healing, high-reliability, resistance to cyber-attack, accommodation of a wide variety of types of distributed generation and storage mechanisms, optimized asset allocation, and minimization of operation and maintenance expenses as well as high-resolution market control that incorporates advanced metering and demand-response.

An important component in operation of smart grids is fault detection, isolation, and restoration of the smart grid. Today, most distribution devices do not communicate with each other but operate and detect faults independently, unaware of the state of other protection devices and the condition of the grid beyond their own location. Furthermore, the protection settings of the distribution devices are configured manually and need to be coordinated precisely. The manual coordination is provided such that the distribution devices closer to the substation are required to wait longer compared to the distribution devices provided far from the substation. The physical effects of communication channels such as shadowing and multipath propagation for example leads to delay in detection of faults that occur at the distribution devices located nearer to the substation. The delay in detection of the fault results in less than optimal isolation of faults, undue equipment stress, and a larger than necessary number of consumers experiencing service outages during the faults.

Terence Smith et al entitled: "Advanced Distribution Reclosing using Wireless Communications" concerns the use of peer-to-peer Ethernet communication between recloser controls in rural electricity distribution systems for smart trip coordination and fault isolation.

For these and other reasons, there is a need for embodiments of the invention.

### BRIEF DESCRIPTION

The present invention provides a method for self-organizing a protection coordination system in a power network as defined in appended claim 1, and a self-organizing protection coordination system in a power network as defined in appended claim 11.

A self-organizing protection coordination system within a power network is provided. The self-organizing protection coordination system within the power network includes a plurality of distribution devices communicatively coupled to each other in a power network. The self-organizing protection coordination system also includes a protection device coupled to each of the plurality of distribution devices configured to transmit power in the power network. The self-organizing protection coordination system power network further includes a controller coupled to each of the plurality of distribution devices. The controller receives communication channel characteristics from a plurality of distribution devices in a power network at an interval of time. The controller subsequently computes a time delay based on the communication channel characteristics. The controller further determines a plurality of reliability indicators at each of the plurality of distribution devices. The controller adjusts tripping characteristics of the plurality of distribution devices to minimize the reliability indicators based on the computed delay.

### DRAWINGS

These and other features and aspects of embodiments of the present invention will become better understood when the following detailed description is read with reference to the accompanying drawings in which like characters represent like parts throughout the drawings, wherein:
FIG. 1 is a diagrammatical representation of a distribution device used in a power network in accordance with an example embodiment of the invention.
FIG. 2 is a flow chart representing the steps involved in a method for automatically calculating the delay in time for receiving the communication channel characteristics from the different distribution devices in accordance with an embodiment of the invention.
FIG. 3 is a schematic representation of a power network including a plurality of distribution devices coupled to each other in accordance with an example embodiment of the invention.
FIG. 4 is an example graphical representation of an initial time current characteristic curve for each of the distribution devices provided in FIG. 3 in accordance with an embodiment of the invention.
FIG. 5 is an example graphical representation of the time current characteristic curve of distribution device of FIG. 3 in accordance with an embodiment of the invention.
FIG. 6 is an example graphical representation of the time current characteristic curve of the distribution device of FIG. 3 in accordance with an embodiment of the invention.
FIG. 7 is a flow chart representing steps involved in a method for self-organizing a protection coordination system within a power network in accordance with an example embodiment of the invention.

### DETAILED DESCRIPTION

Embodiments of the present invention include a system and method for self-organizing protection coordination system within a power network. The power network includes a plurality of distribution devices communicatively coupled to each other that receive communication channel characteristics from each of the distribution devices in the power network. Each of the distribution devices includes a controller coupled to the distribution devices that computes a delay in time for receiving the communication channel characteristics from the plurality of distribution devices in the power network. The controller determines reliability indicators for each of the distribution devices and adjusts tripping characteristics of the distribution devices based on the delay to maximize reliability and minimize outage time and customers impacted.

Generally, power networks include multiple distribution devices electrically coupled to each other. Each of the distribution devices includes a protection device and a controller to control the protection device. The protection device switches between an open and a closed state to provide protection to human life and equipment, and minimize power distribution interruptions caused by temporary or permanent faults. Each of the protection devices operate based on tripping characteristics provided by the controller. The tripping characteristics include a time current characteristic curve that provides a time limit for a given level of current to flow from the protection device before the protection device switches from the closed state to the open state. All of the protection devices in the power network often have the same time current characteristic curve that results in undesirable switching of the protection devices from the closed state to the open state. For example, if a fault occurs at a particular protection device, the protection devices downstream of the above mentioned faulty protection device switch undesirably resulting in an undesired outage. A power network according to embodiments of the invention is described below.

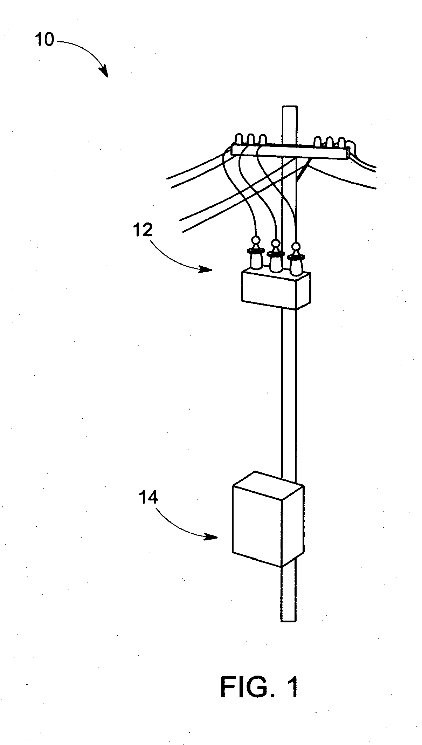

FIG. 1 is a diagrammatical representation of a distribution device 10 in accordance with an example embodiment of the invention. The distribution device 10 includes a protection device 12 and a controller 14 mounted on the distribution device 10. In one embodiment, the distribution device 10 may include an electrical pole. In another embodiment, the protection device 12 includes a recloser, relay, distance protection devices, differential protection devices, phasor based protection devices, current limiting devices and high power electronic devices. The controller 14 controls the switching operations of the protection device 12 based on tripping characteristics of the protection device 12. The tripping characteristics include a time current characteristic curve that determines the switching operations of the protection device 12. However, to avoid the aforementioned undesired outage the time current characteristic curve is automatically updated at different intervals of time to provide an adequate delay in time for switching operation of each of the protection devices 12. In order to overcome the physical effects of the communications channel characteristics, such as shadowing and multipath propagation, the controllers uses techniques that may include error correction signal processing and retransmissions, for example. The delay is calculated based on a communication latency of communication channel characteristics transmitted from the various distribution devices 10. Each of the distribution devices 10 computes the communication latencies automatically via exchanging communication channel characteristics between each other.

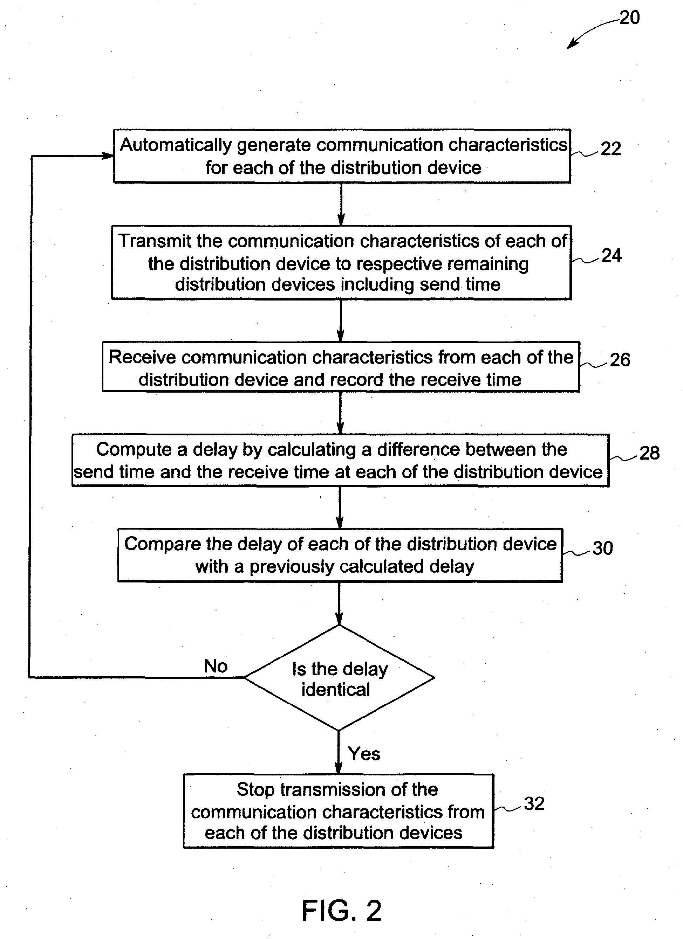

FIG. 2 is a flow chart representing the steps involved in a method 20 for automatically calculating the delay in time for receiving the communication channel characteristics from the different distribution devices in accordance with an embodiment of the invention. The controller of each of the distribution device automatically generates the communication channel characteristics of each of the distribution device in step 22. The communication channel characteristics of each of the distribution devices are transmitted to respective remaining distribution devices in the power network with a send time embedded in the communication channel characteristics in step 24. The respective remaining distribution devices receive the transmitted communication channel characteristics and the controller of the remaining distribution devices records a receive time of the communication channel characteristics in step 26. In one embodiment, all the distribution devices include a global positioning system clocks that are synchronized to an identical time to provide the send and receive time on at the distribution devices. The controller at each of the remaining distribution device computes the delay by calculating the difference between the send time and the receiving time at the respective remaining distribution devices in step 28. The controller of each of the distribution device compares the received delay with a previously received delay in step 30. However, for the initial transmission of the communication channel characteristics the controller compulsorily repeats the steps 22 to 28. In case the delay is identical, the controller stops the transmission of the communication channel characteristics to the distribution devices in step 32 or in case the delay is not identical, the controller repeats the steps 22 to 30. The communication channel characteristics generated in the repeated steps include a new send time and the computed delays of each of the distribution device as received from the previous communication characteristics.

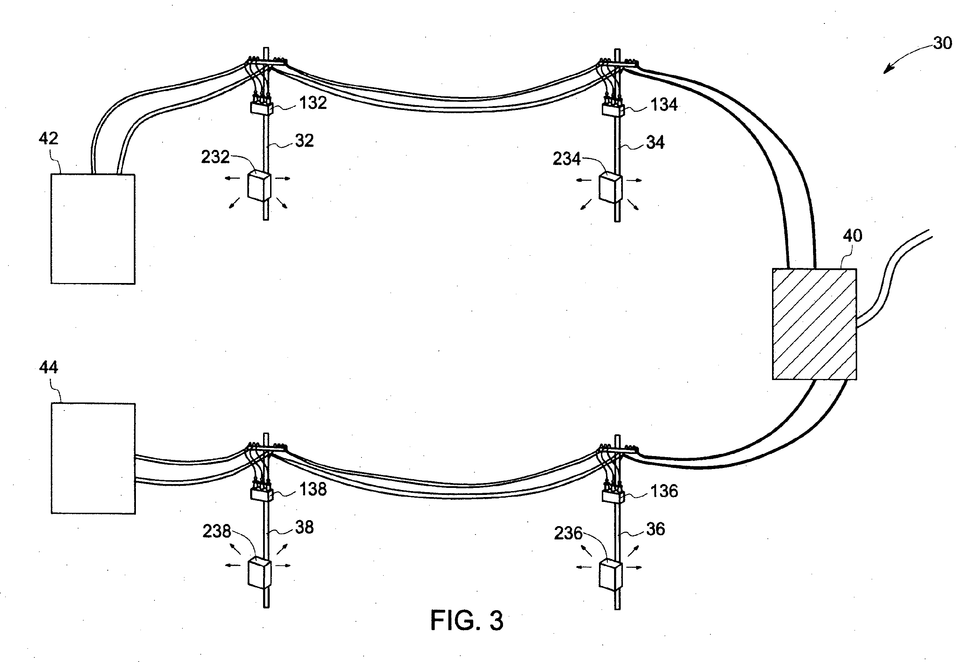

FIG. 3 is an example representation of a power network 30 including a plurality of distribution devices coupled to each other in accordance with an example embodiment of the invention. The power network 30 includes multiple distribution devices 32, 34, 36, 38, a tie switch 40 and substations 42, 44. Each of the distribution devices 32, 34, 36 and 38 include a protection device 132, 134, 136, 138 and a controller 232, 234, 236, 238 respectively. In one embodiment, the power network 30 includes a scale free power network.

During normal operation, when the power network 30 is first deployed and commissioned, the protection devices 132, 134, 136, 138 establish communication between each other via a preferred communication medium. In one embodiment, the preferred communication medium includes private and public wired and wireless systems, and any combination thereof. Examples of such networks include, but are not limited to power line carrier, land line telephony, electric utility radio, WiFi, WiMAX, and cellular telephony, for example. Each of the distribution devices 32, 34, 36, 38 automatically exchange information regarding their GPS location. These radio communications are also used to characterize the communications channel between devices. The devices store the data in their respective controller 232, 234, 236, 238. The distribution devices 32, 34, 36, 38 also communicate with the substations 42, 44 to determine the capacity of each substation. Initially, based upon the location of the distribution device relative to the substation, the controller automatically updates the tripping characteristics of the protection device at the distribution device. Furthermore, the controllers 232, 234, 236 and 238 automatically generate communication channel characteristics for each of the distribution device 32, 34, 36 and 38 respectively and exchange the communication channel characteristics between each other over a preferred medium of communication. In a particular embodiment, each of the controllers 232, 234, 236, 238 include a media access control (MAC) protocol based on a global positioning system (GPS) and a geographic information system (GIS). The GPS provides information about the location of the distribution device and the GIS provides environment information, terrain, foliage, and density information at the distribution device. The controllers 232, 234, 236, 238 aggregate all the information provided by the GPS, GIS and the protection device and distributes the communication channel characteristics among each other within the power network 30. In one embodiment, the GPS can be used to schedule transmissions to avoid collisions and to estimate the delay when provided with a density of the distribution device.

Each of the controllers 232, 234, 236, 238 receives the communication channel characteristics from others and determines a delay in time for receiving the communication channel characteristics from each of the controllers 232, 234, 236, 238. The delay in time is computed by calculating a difference between the send time and the received time at the distribution devices 32, 34, 36, 38 with respect to each other by their respective controllers as described above in detail. Consequently, the controllers 232, 234, 236, 238 calculate the reliability indicators at each of the distribution device 32, 34, 36, 38. In one embodiment, the reliability indicators include, but not limited to, system average interruption duration index (SAIDI), system average interruption frequency index (SAIFI), momentary average interruption duration index (MAIFI), customer average interruption duration index (CAIDI) and customer average interruption frequency index (CAIFI). The controllers 232, 234, 236, 238 calculate the reliability indicators based on the communication channel characteristics received from the distribution devices. Each of the controllers 232, 234, 236, 238 communicates with other controllers and exchanges the reliability indicators of each of the respective distribution devices 32, 34, 36, 38 via the preferred medium of communication. Furthermore, the controllers 232, 234, 236, 238 automatically adjust the tripping characteristics of the respective protection devices 132, 134, 136, 138 based upon the computed delay such that the protection devices of the distribution devices 32, 34, 36, 38 continue to operate and avoid tripping in case of fluctuations in the current levels flowing through the power network 30 to maximize the reliability of the power network and minimize the values of the reliability indicators.

However, the local conditions, density and environmental conditions are dynamic in nature and may cause unexpected delays in receiving the fault message during a fault resulting in false computations and inefficiency. Therefore, the controllers 232, 234, 236, 238 exchange communication channel characteristics at predefined intervals of time and continue to repeat the generation and exchange of communication channel characteristics till the computed delay is identical to the previous delay.

For a better understanding of the invention, assuming that each of the distribution devices 32, 34, 36, 38 serve an equal load and a fault occurs at the distribution device 34, the computed delay would be more for the fault message received at the distribution device 36 compared to the delay at distribution device 32. Furthermore, the delay in time is added to the tripping characteristics of the protection devices 136 and 132 that increases the time before which the protection devices 136, 132 switch from the closed state to the open state in case of an increase in the current levels. Accordingly, the time-current characteristic curve of the protection device 136 of the distribution device 36 is adjusted more compared to the protection device 132 of the distribution device 32. Furthermore, the time current characteristic curve is automatically adjusted in case of any changes in the communication characteristics, for example, addition of new distribution device or change in topology of the power network.

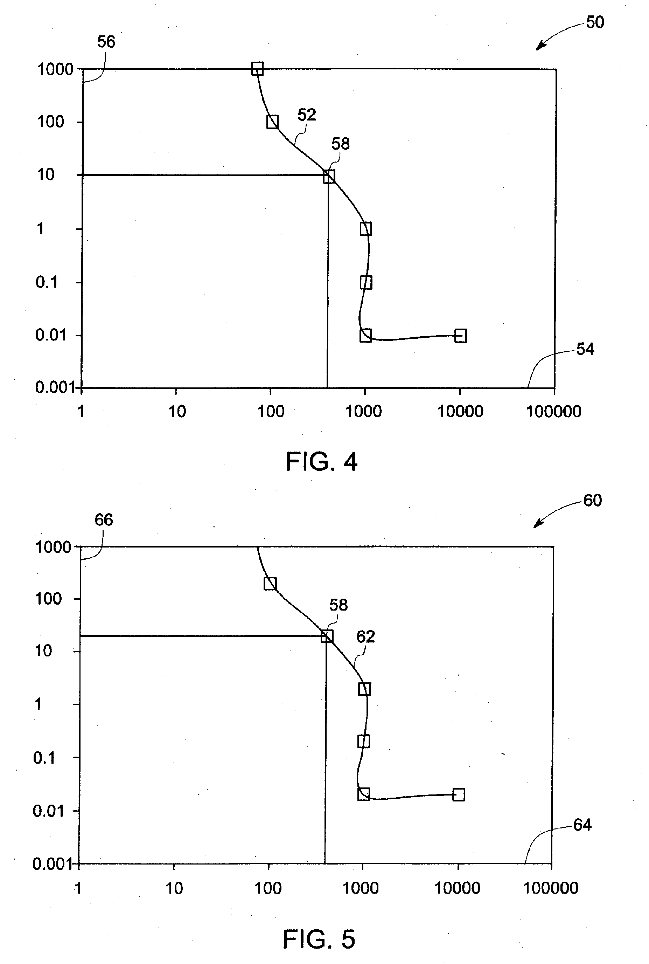

FIG. 4 is an example graphical representation 50 of an initial time current characteristic curve 52 for each of the distribution devices provided in FIG. 3 in accordance with an embodiment of the invention. X-axis 54 represents the current in amperes. Y-axis 56 represents the time in seconds. As described above, each of the protection devices in the power network includes a time current characteristic curve that is initially based on a customer load profile which may be calculated from the demand-response information at that particular distribution device. The time current characteristic curve 52 represents the level of current flowing through the protection device at given time. In an example illustration, point 58 represents a threshold of 10 seconds for a current of 400 ampere flowing through the protection device. As understood, the protection device with switch from closed state to the open state if current of 400 amperes flows from the protection device for more than 10 seconds.

FIG. 5 is an example graphical representation 60 of the time current characteristic curve 62 of distribution device 32 of FIG. 3 in accordance with an embodiment of the invention. X-axis 64 represents the current in amperes. Y-axis 66 represents the time in seconds. As illustrated, the time current characteristic curve is shifted upwards relative to the time current characteristic curve 52 of the distribution device 34 based on the computed delay in receiving the communication characteristics. Assuming that the computed delay is 10 seconds, the point 68 represents a threshold of 400 amperes flowing through the protection device 132 for a time of 20 seconds. As understood, the protection device 132 would delay its switching operations in case of a fault by 10 seconds that would provide additional time for the fault message to reach the distribution device 32 in case of a fault resulting in reduced interruptions.

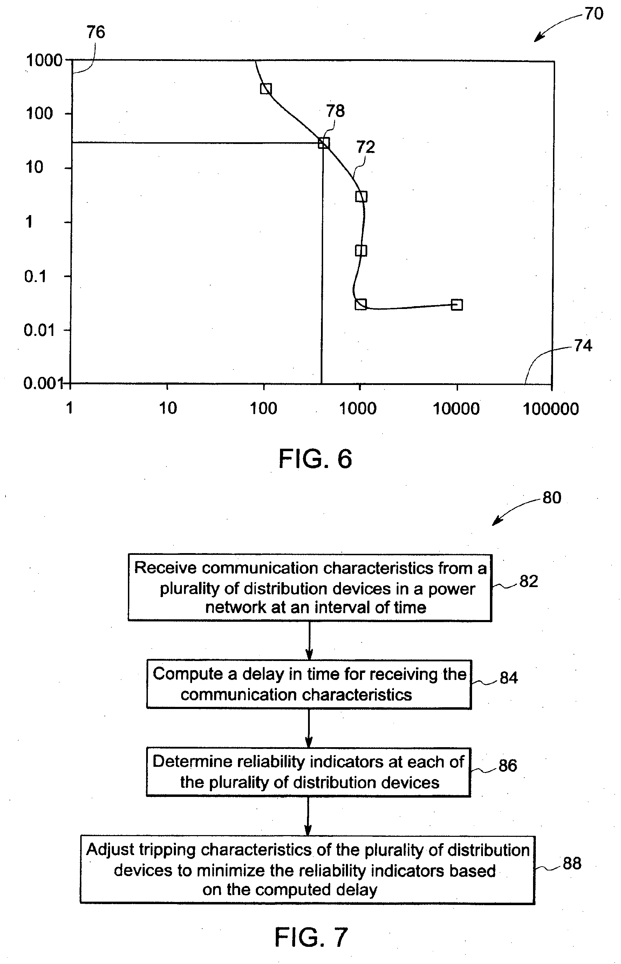

FIG. 6 is an example graphical representation 70 of the time current characteristic curve 72 of the distribution device 36 of FIG. 3 in accordance with an embodiment of the invention. X-axis 74 represents the current in amperes. Y-axis 76 represents the time in seconds. As represented, point 78 depicts a current of 400 amperes flowing through the protection device 136 for a time of 30 seconds. As illustrated, assuming that the computed delay for distribution device 36 is 20 seconds, the time current characteristic curve 72 of the distribution device 36 is shifted further upwards relative to the time current characteristic curve 62 of the distribution device 32 since the delay in receiving the communication channel characteristics is 10 seconds more compared to the computed delay for distribution device 32.

FIG. 7 is a flow chart representing steps involved in a method 80 for self-organizing a protection coordination system in a power network in accordance with an example embodiment of the invention. The method 80 includes receiving communication channel characteristics from a plurality of distribution devices in a power network at an interval of time in step 82. In one embodiment, the communication channel characteristics are received via a preferred communication mode. In an example embodiment, the preferred communication mode includes wired, wireless, WIFI, WIMAX, power line carrier, land line telephony, electric utility radio or cellular telephony. In another embodiment, the communication channel characteristics are received from a global positioning system and a global information system. Furthermore, a delay in time is computed for receiving the communication channel characteristics in step 84. The delay is computed by computing a distance between the plurality of the distribution devices provided by the global positioning system that provides a location of the distribution device and the global information system that provides the local environmental conditions, terrain foliage and density. The method 80 further includes determining reliability indicators at each of the plurality of distribution devices in step 86. In one embodiment, the determining the reliability indicators includes determining SAIDI, SAIFI, CAIFI, CAIDI and MAIFI at each of the distribution devices. In another embodiment, the reliability indicators are determined by exchanging network connectivity messages between the plurality of distribution devices in the distribution network. In an example embodiment, the reliability indicators are determined via network routing tables. The method 80 also includes adjusting tripping characteristics of the plurality of distribution devices to minimize the reliability indicators based on the computed delay in step 88. In an example embodiment, the tripping characteristics are adjusted by adjusting the current sensitivity of the plurality of distribution devices in relation with time. In a particular embodiment, each of the plurality of distribution devices determines communication characteristics, computes delay, determines reliability indicators and adjusts tripping characteristics independently.

The various embodiments of the method described above provide a more efficient way to minimize the reliability indicators. Conventionally, the tripping characteristics of the protection devices were fixed manually resulting in less efficiency. The method described above automatically adjusts the tripping characteristics of the protection devices during operation in case of a permanent fault resulting in minimizing reliability indicators. This significantly increases the efficiency of the smart grids and reduces the number of customers that are affected by the fault.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the true scope of the invention as defined in the appended claims.

While only certain features of the invention have been illustrated and described herein, many modifications and changes will occur to those skilled in the art. It is, therefore, to be understood that the appended claims are intended to cover all such modifications and changes as fall within the true scope of the invention as defined therein.

## Claims

1. A method (80) for self-organizing a protection coordination system in a power network (30), the method performed by a controller (232, 234, 236, 238) coupled to one of a plurality of distribution devices (32, 34, 26, 28) of the power network (30) and comprising:
receiving (82) communication channel characteristics from a plurality of distribution devices in a power network within an interval of time;
computing (84) a delay in time for receiving the communication characteristics from each of the plurality of distribution devices, wherein the delay is calculated based on a communication latency of the communication channel characteristics received from the respective distribution device;
determining (86) a plurality of reliability indicators at each of the plurality of distribution devices based on the received communication channel characteristics; and
adjusting (88) tripping characteristics of the plurality of distribution devices to minimize the reliability indicators based on the computed delay.

2. The method of claim 1, wherein receiving (82) the communication channel characteristics comprises receiving the communication channel characteristics via a preferred communication mode.

3. The method of claim 2, wherein the preferred communication mode comprises wired, wireless, WIFI, WIMAX, power line carrier, land line telephony, electric utility radio or cellular telephony communication.

4. The method of claim 1, 2 or 3, wherein receiving (82) the communication channel characteristics comprises receiving data from a global positioning system (GPS) and a global information system (GIS).

5. The method of claim 4, wherein receiving data from GPS comprises receiving a location of the distribution device.

6. The method of claim 4 or claim 5, wherein receiving data from GIS comprises receiving environmental information, terrain, foliage, and density information of each of the distribution device.

7. The method of any one of claims 1 to 6, wherein adjusting (88) the tripping characteristics comprises adjusting the current sensitivity of the plurality of distribution devices in relation with time.

8. The method of any one of claims 1 to 7, wherein each of the plurality of distribution devices receives communication characteristics, computes delay, determines reliability indicators and adjusts tripping characteristics independently.

9. The method of any one of claims 1 to 8, wherein determining (86) the reliability indicators comprises:
determining the reliability indicators via network routing tables, global positioning system; and/or
determining system average interruption duration index, system average interruption frequency index, momentary average interruption duration index, customer average interruption duration index and customer average interruption frequency index.

10. A non-transitory computer-readable medium comprising computer-readable instructions of a computer program that, when executed by a processor, cause the processor to perform the method of any one of claims 1 to 9.

11. A self-organizing protection coordination system for use in a power network, comprising:
a plurality of distribution devices (32, 34, 36, 38) communicatively coupled to each other in a power network (30);
a protection device (132, 134, 136, 138) coupled to each of the plurality of distribution devices configured to transmit power in the power network (30); and
a controller (232, 234, 236, 238) coupled to each of the plurality of distribution devices (32, 34, 36, 38) configured to:
receive communication channel characteristics from a plurality of distribution devices (32, 34, 36, 38) in the power network (30) at an interval of time;
compute a delay in time for receiving the communication characteristics from each of the plurality of distribution devices, wherein the delay in time is calculated based on a communication latency of the communication channel characteristics received from the respective distribution device;
determine a plurality of reliability indicators at each of the plurality of distribution devices based on the received communication channel characteristics; and
adjust tripping characteristics of the plurality of distribution devices to minimize the reliability indicators based on the computed delay.

12. The system of claim 11, wherein the distribution device (32, 34, 36, 38) comprises an electric pole, the protection device (132, 134, 136, 138) comprises a time-current sensor, and/or the interval of time comprises a predefined duration of time.

13. The system of claim 11 or claim 12, wherein the power network (30) comprises a scale free power network, preferably a transmission network or a distribution network.

14. The system of claim 11, 12 or 13, wherein the plurality of distribution devices (32, 34, 36, 38) are communicatively coupled to each other in a preferred mode of communication preferably comprising wired, wireless, WIFI, WIMAX, power line carrier, land line telephony, electric utility radio or cellular telephony communication.

15. The system of any one of claims 11 to 14, wherein the controller (232, 234, 236, 238) comprises a media access control (MAC) protocol based on a Global Positioning System (GPS) and Geographic information system (GIS), and wherein the GPS preferably provides location of the distribution device and the GIS provides environment information, terrain, foliage, and density information at the distribution device.

## Patentansprüche

1. Verfahren (80) zum Selbstorganisieren eines Schutzkoordinationssystems in einem Stromnetz (30), wobei das Verfahren von einem Steuergerät (232, 234, 236, 238) ausgeführt wird, welches mit mehreren Verteilergeräten (32, 34, 26, 28) des Stromnetzes (30) verbunden ist und Folgendes umfasst:
Empfangen (82) von Kommunikationskanalcharakteristika von mehreren Verteilergeräten in einem Stromnetz innerhalb eines Zeitintervalls;
Berechnen (84) einer Zeitverzögerung für das Empfangen der Kommunikationscharakteristika von jedem der mehreren Verteilergeräte, wobei die Verzögerung auf Grundlage einer Kommunikationslatenz der Kommunikationskanalcharakteristika, die vom jeweiligen Verteilergerät empfangen werden, berechnet wird;
Bestimmen (86) von mehreren Verlässlichkeitsindikatoren für jedes der mehreren Verteilergeräte auf Grundlage der empfangenen Kommunikationskanalcharakteristika; und
Einstellen (88) von Auslösecharakteristika der mehreren Verteilergeräte, um die Verlässlichkeitsindikatoren auf Grundlage der berechneten Verzögerung zu minimieren.

2. Verfahren nach Anspruch 1, wobei das Empfangen (82) der Kommunikationskanalcharakteristika das Empfangen der Kommunikationskanalcharakteristika über einen bevorzugten Kommunikationsmodus umfasst.

3. Verfahren nach Anspruch 2, wobei der bevorzugte Kommunikationsmodus verkabelte oder kabellose Kommunikation, Kommunikation über Wi-Fi, WiMAX, Trägerfrequenzanlage, Telefonfestnetz, Stromversorger-Funknetz oder Mobilfunknetz umfasst.

4. Verfahren nach Anspruch 1, 2 oder 3, wobei das Empfangen (82) der Kommunikationskanalcharakteristika das Empfangen von Daten aus einem globalen Positionsbestimmungssystem (GPS) und aus einem globalen Informationssystem (GIS) umfasst.

5. Verfahren nach Anspruch 4, wobei das Empfangen von Daten aus GPS das Empfangen eines Standorts des Verteilergeräts umfasst.

6. Verfahren nach Anspruch 4 oder 5, wobei das Empfangen von Daten aus GIS das Empfangen von Informationen zu Umwelt, Gelände, Blattwerk sowie Dichteinformationen für jedes der Verteilergeräte umfasst.

7. Verfahren nach einem der Ansprüche 1 bis 6, wobei das Einstellen (88) der Auslösecharakteristika das zeitbezogene Einstellen der Strom-Empfindlichkeit der mehreren Verteilergeräte umfasst.

8. Verfahren nach einem der Ansprüche 1 bis 7, wobei jedes der mehreren Verteilergeräte unabhängig voneinander Kommunikationscharakteristika empfängt, Verzögerung berechnet, Verlässlichkeitsindikatoren bestimmt und Auslösecharakteristika einstellt.

9. Verfahren nach einem der Ansprüche 1 bis 8, wobei das Bestimmen (86) der Verlässlichkeitsindikatoren Folgendes umfasst:
Bestimmen der Verlässlichkeitsindikatoren über Netzwerkroutingtabellen, globales Positionsbestimmungssystem; und/oder
Bestimmen der folgenden Indices: durchschnittliche Unterbrechungsdauer im System, durchschnittliche Unterbrechungsfrequenz im System, durchschnittliche kurzzeitige Unterbrechungsdauer im System, durchschnittliche Unterbrechungsdauer für den Kunden und durchschnittliche Unterbrechungsfrequenz für den Kunden.

10. Nichtflüchtiges, computerlesbares Medium, welches computerlesbare Anweisungen eines Computerprogramms umfasst, welches, wenn es durch einen Prozessor ausgeführt wird, den Prozessor dazu veranlasst, das Verfahren nach einem der Ansprüche 1 bis 9 auszuführen.

11. Selbstorganisierendes Schutzkoordinationssystem für den Einsatz in einem Stromnetz, Folgendes umfassend:
mehrere Verteilergeräte (32, 34, 36, 38), die in einem Stromnetz (30) kommunikativ miteinander verbunden sind;
eine Schutzeinrichtung (132, 134, 136, 138) die mit jedem der mehreren Verteilergeräte verbunden und konfiguriert ist, um Strom im Stromnetz (30) zu übertragen; und
ein Steuergerät (232, 234, 236, 238), das mit jedem der mehreren Verteilergeräte (32, 34, 36, 38) verbunden und konfiguriert ist, um Folgendes auszuführen:
Empfangen von Kommunikationskanalcharakteristika von mehreren Verteilergeräten (32, 34, 36, 38) im Stromnetz (30) in einem Zeitintervall;
Berechnen einer Zeitverzögerung für das Empfangen der Kommunikationscharakteristika von jedem der mehreren Verteilergeräte, wobei die Zeitverzögerung auf Grundlage einer Kommunikationslatenz der Kommunikationskanalcharakteristika, die vom jeweiligen Verteilergerät empfangen werden, berechnet wird;
Bestimmen von mehreren Verlässlichkeitsindikatoren für jedes der mehreren Verteilergeräte auf Grundlage der empfangenen Kommunikationskanalcharakteristika; und
Einstellen von Auslösecharakteristika der mehreren Verteilergeräte, um die Verlässlichkeitsindikatoren auf Grundlage der berechneten Verzögerung zu minimieren.

12. System nach Anspruch 11, wobei das Verteilergerät (32, 34, 36, 38) einen Strommast umfasst, die Schutzeinrichtung (132, 134, 136, 138) einen Zeit-Strom-Sensor umfasst, und/oder das Zeitintervall einen vorherbestimmten Zeitraum umfasst.

13. System nach Anspruch 11 oder 12, wobei das Stromnetz (30) ein skalenfreies Stromnetz umfasst, vorzugsweise ein Übertragungsnetz oder ein Verteilernetz.

14. System nach Anspruch 11, 12 oder 13, wobei die mehreren Verteilergeräte (32, 34, 36, 38) unter Einsatz eines bevorzugten Kommunikationsmodus kommunikativ miteinander verbunden sind, der vorzugsweise verkabelte oder kabellose Kommunikation, Kommunikation über Wi-Fi, WiMAX, Trägerfrequenzanlage, Telefonfestnetz, Stromversorger-Funknetz oder Mobilfunknetz umfasst.

15. Verfahren nach einem der Ansprüche 11 bis 14, wobei der Empfänger (232, 234, 236, 238) ein MAC-Protokoll (Media Access Control) auf Grundlage eines globalen Positionsbestimmungssystems (GPS) und eines geografischen Informationssystems (GIS) umfasst, und wobei das GPS vorzugsweise den Standort des Verteilergeräts angibt und wobei das GIS Informationen zu Umwelt, Gelände, Blattwerk sowie Dichteinformationen am Verteilergerät umfasst.

## Revendications

1. Une méthode (80) pour auto-organiser un système de coordination de protection dans un réseau d'énergie (30), la méthode étant effectuée par un contrôleur (232, 234, 236, 238) couplé à l'un d'une pluralité de dispositifs de distribution (32, 34, 26, 28) du réseau d'énergie (30) et comprenant :
la réception (82) de caractéristiques de canal de communication en provenance d'une pluralité de dispositifs de distribution dans un réseau d'énergie à l'intérieur d'un intervalle de temps ;
le calcul (84) d'un retard de temps pour recevoir les caractéristiques de communication en provenance de chacun de la pluralité de dispositifs de distribution, dans lequel le retard est calculé en se basant sur une latence de communication des caractéristiques de canal de communication reçues en provenance du dispositif de distribution respectif ;
la détermination (86) d'une pluralité d'indicateurs de fiabilité au niveau de chacun de la pluralité de dispositifs de distribution en se basant sur les caractéristiques de canal de communication reçues ; et
l'ajustement (88) des caractéristiques de déclenchement de la pluralité de dispositifs de distribution pour minimiser les indicateurs de fiabilité en se basant sur le retard calculé.

2. La méthode selon la revendication 1, dans laquelle la réception (82) des caractéristiques de canal de communication comprend la réception des caractéristiques de canal de communication via un mode de communication préféré.

3. La méthode selon la revendication 2, dans laquelle le mode de communication préféré comprend une communication par câble, sans fil, par WIFI, par WIMAX, par courant porteur sur ligne électrique, par téléphonie sur ligne terrestre, par radio de service d'électricité ou par téléphonie cellulaire.

4. La méthode selon la revendication 1, 2 ou 3, dans laquelle la réception (82) des caractéristiques de canal de communication comprend la réception de données en provenance d'un système mondial de localisation (GPS) et d'un système mondial d'informations (GIS).

5. La méthode selon la revendication 4, dans laquelle la réception de données provenant du GPS comprend la réception d'une localisation du dispositif de distribution.

6. La méthode selon la revendication 4 ou la revendication 5, dans laquelle la réception de données en provenance du GIS comprend la réception d'informations environnementales, de terrain, de végétation et de densité de chacun des dispositifs de distribution.

7. La méthode selon n'importe laquelle des revendications 1 à 6, dans laquelle l'ajustement (88) des caractéristiques de déclenchement comprend l'ajustement de la sensibilité en courant de la pluralité de dispositifs de distribution par rapport au temps.

8. La méthode selon n'importe laquelle des revendications 1 à 7, dans laquelle chacun de la pluralité de dispositifs de distribution reçoit des caractéristiques de communication, calcule un retard, détermine des indicateurs de fiabilité et ajuste des caractéristiques de déclenchement indépendamment.

9. La méthode selon n'importe laquelle des revendications 1 à 8, dans laquelle la détermination (86) des indicateurs de fiabilité comprend :
la détermination des indicateurs de fiabilité via des tables d'acheminement sur réseau, un système mondial de localisation ; et/ou
la détermination d'un indice de durée moyenne d'interruption de système, d'un indice de fréquence moyenne d'interruption de système, d'un indice de durée moyenne d'interruption momentanée, d'un indice de durée moyenne d'interruption client et un indice de fréquence moyenne d'interruption client.

10. Un support non transitoire lisible par ordinateur comprenant des instructions lisibles par ordinateur d'un programme informatique qui, lorsqu'il est exécuté par un processeur, conduit le processeur à effectuer la méthode selon n'importe laquelle des revendications 1 à 9.

11. Un système de coordination de protection à auto-organisation à utiliser dans un réseau d'énergie, comprenant :
une pluralité de dispositifs de distribution (32, 34, 36, 38) couplés les uns aux autres par communication dans un réseau d'énergie (30) ;
un dispositif de protection (132, 134, 136, 138) couplé à chacun de la pluralité de dispositifs de distribution configuré pour transmettre de l'énergie dans le réseau d'énergie (30) ; et
une unité de commande (232, 234, 236, 238) couplée à chacun de la pluralité de dispositifs de distribution (32, 34, 36, 38) configurée pour :
recevoir des caractéristiques de canal de communication en provenance d'une pluralité de dispositifs de distribution (32, 34, 36, 38) dans le réseau d'énergie (30) à un intervalle de temps ;
calculer un retard de temps pour recevoir les caractéristiques de communication en provenance de chacun de la pluralité de dispositifs de distribution, dans lequel le retard de temps est calculé en se basant sur une latence de communication des caractéristiques de canal de communication reçues en provenance du dispositif de distribution respectif ;
déterminer une pluralité d'indicateurs de fiabilité au niveau de chacun de la pluralité de dispositifs de distribution en se basant sur les caractéristiques de canal de communication reçues ; et
l'ajustement des caractéristiques de déclenchement de la pluralité de dispositifs de distribution pour minimiser les indicateurs de fiabilité en se basant sur le retard calculé.

12. Le système selon la revendication 11, dans lequel le dispositif de distribution (32, 34, 36, 38) comprend un pôle électrique, le dispositif de protection (132, 134, 136, 138) comprend un capteur de temps-courant, et/ou l'intervalle de temps comprend une durée de temps prédéterminée.

13. Le système selon la revendication 11 ou la revendication 12, dans lequel le réseau d'énergie (30) comprend un réseau d'énergie sans échelle, de préférence un réseau de transmission ou un réseau de distribution.

14. Le système selon la revendication 11, 12 ou 13, dans lequel les plusieurs dispositifs de distribution (32, 34, 36, 38) sont couplés les uns aux autres par communication dans un mode de communication préféré comprenant de préférence une communication par câble, sans fil, par WIFI, par WIMAX, par courant porteur sur ligne électrique, par téléphonie sur ligne terrestre, par radio de service d'électricité ou par téléphonie cellulaire.

15. Le système selon n'importe laquelle des revendications 11 à 14, dans lequel l'unité de commande (232, 234, 236, 238) comprend un protocole de commande d'accès au support (MAC) basé sur un Système Mondial de Localisation (GPS) et un système d'informations Géographiques (GIS), et dans lequel le GPS fournit de préférence la localisation du dispositif de distribution et le GIS fournit des informations d'environnement, de terrain, de végétation et de densité au niveau du dispositif de distribution.
